(19) Europäisches Patentamt
European Patent Office
Office européen des brevets

(11) Publication number: 0 171 370
B1

(12) # EUROPEAN PATENT SPECIFICATION

(45) Date of publication of patent specification: 23.11.89

(51) Int. Cl.$^4$: D 21 C 5/02

(21) Application number: 85850070.5

(22) Date of filing: 04.03.85

(54) **Method for the reduction of discolouration and/or tackiness when upgrading waste paper.**

(30) Priority: 19.03.84 SE 8401498

(43) Date of publication of application:
12.02.86 Bulletin 86/07

(45) Publication of the grant of the patent:
23.11.89 Bulletin 89/47

(84) Designated Contracting States:
AT BE CH DE FR GB LI NL

(56) References cited:
EP-A-0 013 027
DE-A-2 919 866
DE-B-1 243 963
DE-B-2 610 277

DERWENT'S ABSTRACT no 27 023k/11 SU 926 129

(73) Proprietor: BEROL KEMI AB
Box 851
S-444 01 Stenungsund 1 (SE)

(72) Inventor: Elsby, Leif
Uppegardsvägen 25
S-444 00 Stenungsund (SE)
Inventor: Carlsson, Agneta
Hällebäcksvägen 66
S-444 00 Stenungsund (SE)

(74) Representative: Andersson, Rolf
BEROL KEMI AB
S-444 85 Stenungsund (SE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 171 370 B1

## Description

The present invention refers to a method for the reduction of discolouration and/or tackiness in the upgrading of waste paper by adding a surface active, ammonium compound.

When waste paper fibres are used for the production of different products, such as tissue, newsprint, board, and carton, difficulties arise due to the fact that the fibre suspension contains particular impurities discolouring the waste paper based pulp and/or making the waste paper based pulp tacky. The tacky impurities in waste paper usually originate from adhesives or different coating materials, such as polymers of styrene-butadiene-latex type. These materials originate from self-adhering labels and envelopes, tapes, sizing and binding agents in coated paper and similar paper products which are present in waste paper. The discolouring impurities mainly originate from the printing inks used for the production of printed products, such as newsprint, magazines, packing materials, computer lists, and formulars.

In the production of fibre products based on waste paper difficulties due to the presence of discolouring and tacky impurities may occur in different ways, e.g. the discolouring and/or tacky impurities stick to the wires and felts of the paper machines. The paper machines must therefore often be stopped for cleaning, which means great costs for lost production. By the sheet formation on a Fourdrinier paper machine these discolouring and/or tacky impurities tend to agglomerate on the upper side of the newly formed paper web. Therefore, the impurities to a great extent stick to the felts in the subsequent press section. On a twin wire machine these impurities to a great extent stick to the wires instead. The discolouring and/or tacky impurities are also found on other parts of the paper machines, i.e. on rolls and suction boxes, and naturally also on the formed and dried fibre product. Discolouring and/or tacky impurities in the dried paper also lead to problems in the coating, printing, cutting, rolling, stacking and similar working procedures. Moreover, the impurities cause stains, which apart from possible technical problems also deteriorate the finish of the fibre products.

The Japanese Patent application 82 29.691 discloses that the content of tacky impurities can be diminished by washing a fibre suspension of waste paper by the addition of a higher alkylamine-ethylene oxide adduct. In the Japanese patent application 82 25.489 it is suggested to reduce the content of discolouring impurities in waste paper by applying a decolouration composition based on an alkylamine-ethylene oxide-propylene oxide adduct. The compounds cited in these applications are however expensive to produce, and at the same time their ability to remove impurities is limited. In the cases when they are based on saturated, long alkyl chains they have also shown unsuitable physical properties.

Other compounds often used by deinking waste paper are e.g. alkylphenol ethylene oxide adducts and soaps, but also these compounds have a limited effect. In EP—A—13 027, it is suggested to combine fatty acids with alfa-hydroxyamine derivates.

According to the present invention it has proved possible to produce waste paper based products with improved processability, e.g. in the wet section and press section of the paper machines. This is achieved by using a specific surface active nitrogen containing compound, which affects among other things the tackiness of these impurities so that the adhesion to the materials commonly used for the manufacture of wires and felts is reduced. The reduction of the adhesion is obtained regardless of the fact that the adhesive polymeric material is based on polystyrene butadiene, polyacryl amide, polyvinyl acetate, polyvinyl alcohol or natural latex or modifications thereof. Moreover, the amount of discolouring and tacky impurities is reduced as well as the tendency of the impurities to agglomerate and form stains.

These advantages are obtained according to the invention by adding, before the sheet formation of a fibre suspension of waste paper, a tertiary or quaternary ammonium compound with the general formula:

$$(R)_m-\overset{\overset{X}{|}}{N^+}-(A)_{3-m}\quad Y^-$$

where A denotes an alkyl group with 1—4 carbon atoms or the group $(B)_pH$ where B is an alkyleneoxy group derived from an alkylene oxide with 2—4 carbon atoms, at least 50%, preferably at least 80%, of all alkyleneoxy groups being ethyleneoxy groups, p is a number from 0—30, m is a number from 1—3, X denotes hydrogen, an alkyl group with 1—2 carbon atoms or a hydroxyalkyl group with 2—4 carbon atoms, Y is an anion, preferably monovalent, and R is one of the groups

$$R_1\overset{\overset{O}{\|}}{C}-O-(B)_p-C_qH_{2q}- \qquad a)$$

where $R_1$ is a hydrocarbon group of 9—23 carbon atoms, q denotes a number 2—4, and B and p have the above meaning.

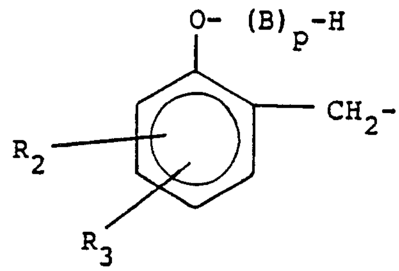

b)

where B and p have the above meaning, $R_2$ and $R_3$ are alkyl groups with 1—18 carbon atoms or hydrogen or groups with the formula

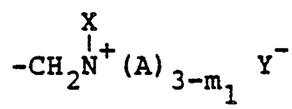

where A, X, and Y have the above meaning, and $m_1$ is a number 0—2 or

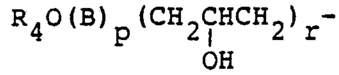

c)

where $R_4$ denotes a hydrocarbon group of 10—35 carbon atoms, r is a number 1—3, and B and p have the above meaning; or the base form thereof.

The added amount of the ammonium compound can vary within wide ranges but is normally within the interval of 0.05—2.0, preferably 0.1—1.0 per cent by weight, calculated on the dry cellulose fibres. The point of addition is not critical but the addition must of course be made before the sheet formation or in the case deinking is required by the flotation or washing of the pulp at the latest.

When the aim is to make the tacky compounds harmless, the addition can be made in connection with the pulping of the waste paper or preferably when preparing a pulp suspension suitable for sheet formation. If in the first place deinking of the pulp is desired, it is suitable to add the ammonium compounds in connection with the pulping of the waste paper. The suspension obtained is then suitably subjected to froth flotation or washing.

Especially suitable ammonium compounds are those which contain an acyl group and have the general formula

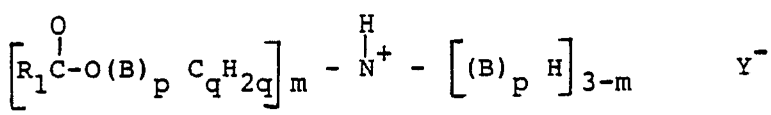

where $R_1$, B, Y, m, p, and q have the above meaning, or the base form thereof. Examples on suitable compounds are esters of mono-, di-, or tri-fatty acids of triethanolamine, which have been reacted with 5—25 moles of ethylene oxide per mole of triethanolamine. Suitably the grade of ethoxylation increases with the amount of esterified groups.

Another group of preferred ammonium compounds are those with the formula

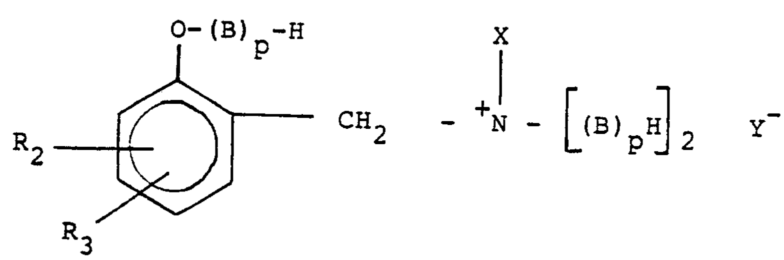

where B, X, Y, and p have the above meaning, and $R_2$ and $R_3$ are alkyl groups with 1—18 carbon atoms or groups with the formula

$$CH_2 - \overset{X}{\underset{|}{N^+}} - (B_pH)_2 \quad Y^-,$$

where B, X, Y and p have the above meaning, or the base form thereof. Especially suitable compounds are those obtained when substituted phenols, such as butyl phenol, dibutyl phenol, oktyl phenol, dioktyl phenol, nonyl phenol, and dinonyl phenol are reacted by a Mannich-reaction with formaldehyde or paraformaldehyde and ammonia or a primary amine or preferably a secondary amine in the form of a dialkanolamine in approximately equimolar amounts, so that a compound with at least one nitrogen is formed. The obtained Mannich-compound is then ethoxylated, preferably with 7—30 moles of ethylene oxide per mole of phenol rest.

A further group of suitable compounds are those with the general formula

$$\left[R_4O(B)_p\ CH_2\underset{OH}{\underset{|}{C}}HCH_2\right]_m - \overset{X}{\underset{|}{N^+}} - (A)_{3-m}\ Y^-$$

where $R_4$, B, A, X, Y, p, and m have the above meaning, or the base form thereof. Preferably, m is the number 2 and A a methyl group. These compounds can easily be produced by reacting an optionally alkoxylated, preferably ethoxylated, alcohol or substituted phenol with epichlorhydrin. The obtained glycidyl compound can be reacted with ammonia or a primary amine with subsequent alkylation or preferably with a secondary amine. If desired, the obtained tertiary ammonium compound can be quaternized in known manner.

Besides the tertiary or quaternary ammonium compound also other additives commonly used in the upgrading of waste paper can be added, if these additives do not negatively influence the tertiary or quaternary ammonium compound. Such additives can be complexing agents, defoamers, pH-regulators, bleaching agents and bacterizides.

The Examples below will further illustrate the invention. All percentage figures are per cent by weight, if nothing else is said.

### Example 1

Waste paper consisting of 70% newsprint and 30% magazines as well as one self-adhering label covered with butadiene-latex was pulped in a laboratory pulper for 30 minutes at 40°C and 6% pulp concentration in the presence of 1% sodium metasilicate, 1% hydrogen peroxide and 0.3% of a surface active compound, all ingredients calculated on the amount of waste paper. The surface active compound was diethanolaminomethyldinonyl phenol, to which first 12 moles of ethylene oxide per mole of phenol were reacted and thereafter quaternized with dimethyl sulphate. In a comparison test nonyl phenol was added as surface active agent, to which 10 moles of ethylene oxide per mole of phenol were reacted. After pulping the pulp suspension was left to stand for 30 minutes at 40°C. Then it was diluted with water to a pulp concentration of 1%, dewatered to a pulp concentration of 10% on a filter. The dilution and dewatering were repeated twice. The cleaned pulp was then investigated regarding the amount of tacky impurities and the amount of discolouring compounds. The press water from the first dewatering step was investigated regarding foaming in a conventional apparatus. The amount of tacky particular impurities was determined by screening the pulp in a vibration screen with 0.3 mm slots. The tacky particular impurities were taken away from the screen by hand and weighed. The tackiness of the tacky impurities was calculated by using a formula $A = (X/B - 1)\cdot 100$, where A denotes the tackiness in percentage, B denotes the amount of tacky particular impurities that was received, if pulping is performed without surface active agents and directly washed in a vibration screen, and X denotes the amount of tacky particular materials received when pulping is performed in the presence of the surface active agent to be investigated, after washing and screening. The higher value for A, the larger agglomeration tendency for the tacky impurities. The amount of discolouring compounds were determined by forming the pulp to sheets. Thereafter the brightness of the dried sheet was determined with an Elrepho apparatus at 457 nm according to ISO-standards. The following results were obtained:

| | According to the invention | Comparison |
|---|---|---|
| Tackiness, A | 16.2 | 42.6 |
| Brightness after dewatering, % of the standard reference | 57.6 | 55.6 |
| Foaming, mm | 4 | 20 |

From the results it is evident that pulp produced according to the invention has less tackiness, higher brightness than pulp produced according to prior art. Besides the water from the first dewatering step in the process according to the invention show very low foaming.

Example 2—12

The effect of a number of surfactants on the adhesion property of an additive of styrene butadiene type was tested in the following manner. A self-adhering label of the same type as in Example 1 was placed in a water solution containing 100 ppm of the surfactant to be investigated. After 1 minute the label was placed on a plastic wire. After 1 minute the label and wire were carefully torn from each other, whereby the adhesion was determined subjectively as follows:

1 strong adhesion
2 moderate adhesion
3 weak adhesion

For most of the surface active compounds also their effect on the tackiness of the additive according to the method in example 1 was determined. The following result was obtained:

| Test Ex. | Compound | Adhesion | Tackiness |
|---|---|---|---|
| 2 | diethanolaminomethyldinonylphenol + 12 EO | 2 | 22.6 |
| 3 | bis[dinonylphenoxy-$(EO)_{10}CH_2CH(OH)CH_2$]-dimethyl ammonium chloride | 2 | 18.4 |
| 4 | bis($C_{10-14}$-alkyl-$OCH_2CHOHCH_2$)dimethyl-ammonium chloride | 2 | |
| 5 | The compound in Example 1 | 3 | 16.2 |
| 6 | dicoco fatty acid ester of triethanolamine + 20 EO | 3 | |
| 7 | monococo fatty acid ester of triethanolamine + 15 EO | 3 | |
| 8 | trioleic acid ester of triethanolamine + 20 EO | 3 | |
| 9 | Dioleic acid ester of triethanolamine + 15 EO | 3 | 16.4 |
| 10 | monooleic acid ester of triethanolamine + 10 EO | 3 | 17.4 |
| 11 | 50% each of the compounds on Ex. 10 and 5 | 3 | |
| 12 | dioleic acid ester of triethanolamine + 12 EO + 3 PO (EO and PO randomly reacted) | 3 | 16.6 |
| Comparison | | | |
| A | Oleyl amine + 5 EO + 2 PO (EO and PO randomly reacted) | 1 | 32.4 |
| B | no additive | 1 | 41.9 |
| C | Na-oleate/stearate | 1 | 42.3 |
| D | Nonylphenol + 10 EO | 1 | 42.6 |
| E | Coco fatty amine + 15 EO | 1 | 28.9 |
| F | Coco fatty amine + 10 EO; quaternized with dimethyl sulphate | 1 | 29.2 |

From the result it is evident that the compounds added in the method according to the invention considerably reduce the tackiness caused by the presence of self-adhering labels.

Example 13—15

In the same manner as in Example 11 the adhesion towards a plastic wire was tested, but with the difference that the adhesive was based on polyvinyl acetate, polyvinyl alcohol or polyacryl amid. For all the adhesives a weak adhesion was received which was given the value 3.

**Claims**

1. Method for the reduction of discolouration and/or tackiness when upgrading waste paper, characterized in that a tertiary or quaternary ammonium compound with the general formula

$$(R)_m-\overset{\overset{X}{|}}{N^+}-(A)_{3-m}\quad Y^-$$

where A denotes an alkyl group with 1—4 carbon atoms or the group $(B)_pH$, where B is an alkyleneoxy group derived from an alkylene oxide with 2—4 carbon atoms, at least 50%, preferably at least 80%, of all alkyleneoxy groups being ethyleneoxy groups, p is a number 0—30, m is a number 1—3, X denotes hydrogen, an alkyl group with 1—2 carbon atoms or a hydroxyalkyl group with 2—4 carbon atoms, Y is an anion, preferably monovalent, and R is one of the groups

$$R_1\overset{\overset{O}{\|}}{C}-O-(B)_p-C_qH_{2q}-$$

a)

where $R_1$ is a hydrocarbon group with 9—23 carbon atoms, q denotes a number 2—4, and B and p have the above meaning.

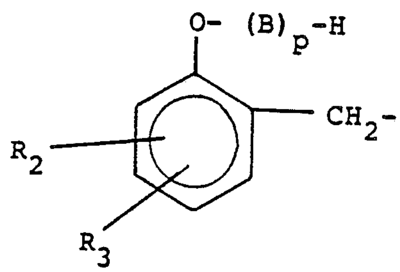

b)

where B and p have the above meaning, $R_2$ and $R_3$ are alkyl groups with 1—18 carbon atoms or hydrogen or groups with the formula

$$-CH_2\overset{\overset{X}{|}}{N^+}(A)_{3-m_1}\quad Y^-$$

where A, X, and Y have the above meaning, and $m_1$ is a number 0—2, or

$$R_4O(B)_p(CH_2\underset{\underset{OH}{|}}{C}HCH_2)_r-$$

c)

where $R_4$ denotes a hydrocarbon group with 10—35 carbon atoms, r is a number 1—3, and B and p have the above meaning; or the base form thereof, is added prior to the sheet formation of a fibre suspension based on the waste paper.

2. Method according to claim 1, characterized in that the ammonium compound to be added has the general formula

$$\left[R_1\overset{\overset{O}{\|}}{C}-O(B)_pC_qH_{2q}\right]_m-\overset{\overset{H}{|}}{N^+}-\left[(B)_pH\right]_{3-m}\qquad Y^-$$

where $R_1$, B, Y, m, p, and q have the above meaning, or the base form thereof.

3. Method according to claim 1, characterized in that the ammonium compound to be added has the general formula

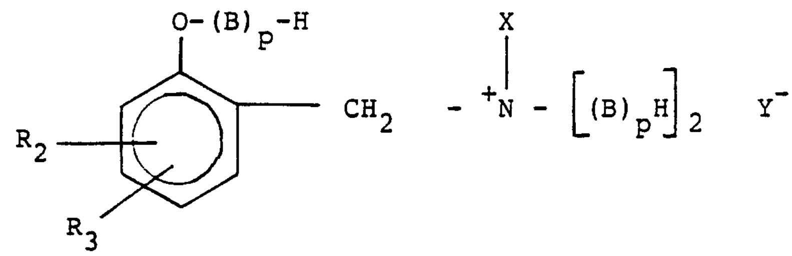

where B, X, Y, and p have the above meaning and $R_2$ and $R_3$ are alkyl groups with 1—18 carbon atoms or groups with the formula

$$CH_2 - \overset{X}{\overset{|}{N^+}} - (B_pH)_2 \quad Y^-,$$

where B, X, Y and p have the above meaning, or the base form thereof.

4. Method according to claim 1, characterized in that the ammonium compound to be added has the general formula

$$R_4O(B)_p \; CH_2\underset{OH}{\underset{|}{C}}HCH_2 \;{}_m - \overset{X}{\overset{|}{N^+}} - (A)_{3-m} \quad Y^-$$

where $R_4$, B, A, X, Y, p, and m have the above meaning, or the base thereof.

5. Method according to claim 4, characterized in that m is 2 and A a methyl group.

6. Method according to any of the claims 1—5, characterized in that the ammonium compound is added in an amount of 0.05—2.0, preferably 0.1—1.0 per cent calculated on the dry cellulose fibres.

7. Method according to any of the claims 1—6, characterized in that the ammonium compound is added to the pulp after delinking but before the sheet formation.

**Patentansprüche**

1. Verfahren zur Verringerung von Verfärbungen und/oder Klebrigkeit bei der Qualitätsverbesserung von Abfallpapier, dadurch gekennzeichnet, daß man vor der Blattbildung aus einer auf dem Abfallpapier basierenden Fasersuspension eine tertiäre oder quaternäre Ammoniumverbindung mit der allgemeinen Formel

$$(R)_m - \overset{X}{\overset{|}{N^+}} - (A)_{3-m} \quad Y^-$$

in welcher A für eine Alkylgruppe mit 1 bis 4 Kohlenstoffatomen oder die Gruppe $(B)_pH$ steht, worin B eine von einem Alkylenoxid mit 2 bis 4 Kohlenstoffatomen abgeleitete Alkylenoxygruppe ist, wobei wenigstens 50%, vorzugsweise wenigstens 80% aller Alkylenoxygruppen Ethylenoxygruppen sind, p eine Zahl von 0 bis 30 ist, m eine Zahl von 1 bis 3 ist, X Wasserstoff, eine Alkylgruppe mit 1 bis 2 Kohlenstoffatomen oder eine Hydroxyalkylgruppe mit 2 bis 4 Kohlenstoffatomen darstellt, Y ein Anion, vorzugsweise ein einwertiges, bedeutet und R eine der Gruppen

$$R_1\overset{O}{\overset{\|}{C}}-O-(B)_p - C_qH_{2q}- \qquad a)$$

worin $R_1$ eine Kohlenwasserstoffgruppe mit 9 bis 23 Kohlenstoffatomen darstellt, q eine Zahl von 2 bis 4 ist und B und p die obige Bedeutung haben;

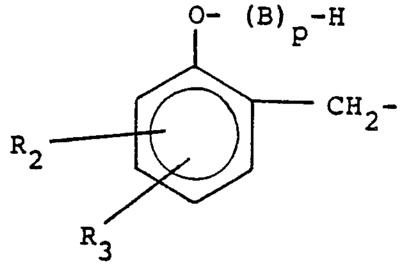

b)

worin B und p die obige Bedeutung haben, $R_2$ und $R_3$ Alkylgruppen mit 1 bis 18 Kohlenstoffatomen oder Wasserstoff oder Gruppen mit der Formel

$$-CH_2\overset{X}{\overset{|}{N^+}}(A)_{3-m_1}\quad Y^-$$

repräsentieren, worin A, X und Y die obige Bedeutung haben und $m_1$ eine Zahl von 0 bis 2 ist; oder

$$R_4O(B)_p(CH_2\underset{OH}{\underset{|}{C}}HCH_2)_r- \qquad c)$$

in welcher $R_4$ eine Kohlenwasserstoffgruppe mit 10 bis 35 Kohlenstoffatomen repräsentiert, r eine Zahl von 1 bis 3 ist und B und p die obige Bedeutung haben; ist, oder die Basenform davon, zugibt.

2. Verfahren nach Anspruch 1, dadurch gekennzeichnet, daß die zuzugebende Ammoniumverbindung die allgemeine Formel

$$\left[R_1\overset{O}{\overset{\|}{C}}-O(B)_p\ C_qH_{2q}\right]_m - \overset{H}{\overset{|}{N^+}} - \left[(B)_p\ H\right]_{3-m}\qquad Y^-$$

in welcher $R_1$, B, Y, m, p und q die obige Bedeutung haben, oder die Basenform davon, hat.

3. Verfahren nach Anspruch 1, dadurch gekennzeichnet, daß die zuzugebende Ammoniumverbindung die allgemeine Formel

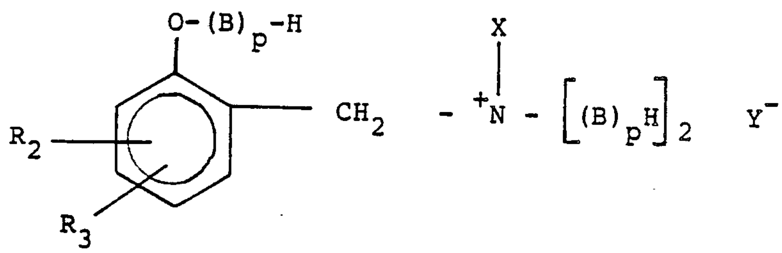

worin B, X, Y und p die obige Bedeutung haben und $R_2$ und $R_3$ Alkylgruppen mit 1 bis 18 Kohlenstoffatomen oder Gruppen mit der Formel

$$CH_2 - \overset{X}{\overset{|}{N^+}} - (B_pH)_2\quad Y^-,$$

worin B, X, Y und p die obige Bedeutung haben, darstellen, oder die Basenform davon, aufweist.

4. Verfahren nach Anspruch 1, dadurch gekennzeichnet, daß die zuzugebende Ammoniumverbindung die allgemeine Formel

$$\left[R_4O(B)_p\ CH_2\underset{OH}{C}HCH_2\right]_m - \overset{X}{\underset{|}{N^+}} - (A)_{3-m}\ Y^-$$

worin $R_4$, B, A, X, Y, p und m die obige Bedeutung haben, oder die Base davon, aufweist.

5. Verfahren nach Anspruch 4, dadurch gekennzeichnet, daß m 2 ist und A eine Methylgruppe bedeutet.

6. Verfahren nach irgendeinem der Ansprüche 1 bis 5, dadurch gekennzeichnet, daß die Ammoniumverbindung in einer Menge von 0,05 bis 2,0, vorzugsweise 0,1 bis 1,0%, bezogen auf die trockenen Cellulosefasern, zugegeben wird.

7. Verfahren nach irgendeinem der Ansprüche 1 bis 6, dadurch gekennzeichnet, daß die Ammoniumverbindung nach der Druckfarbenentfernung aber vor der Blattbildung zum Halbstoff gegeben wird.

**Revendications**

1. Procédé pour la réduction du changement de couleur et/ou du poisseux lors de la valorisation de vieux papiers, caractérisé en ce que, avant la formation de la feuille d'une suspension de fibres à base de vieux papiers, on ajoute un composé de l'ammonium tertiaire ou quaternaire, ayant la formule générale

$$(R)_m-\overset{X}{\underset{|}{N^+}}-(A)_{3-m}\quad Y^-$$

dans laquelle A est un groupe alkyle ayant de 1 à 4 atomes de carbone, ou le groupe $(B)_pH$, où B est un groupe oxyalkylène dérivant d'une oxyde d'alkylène ayant 2—4 atomes de carbone, au moins 50%, de préférence au moins 80%, de tous les groupes oxyalkylène étant des groups oxyéthylène, p est un nombre de 0 à 30, m est un nombre de 1 à 3, X désigne un hydrogène, un groupe alkyle ayant de 1 à 2 atomes de carbone ou un groupe hydroxyalkyle ayant de 2 à 4 atomes de carbone, Y est un anion, de préférence monovalent, et R est l'un des groupes

$$R_1\overset{O}{\overset{\|}{C}}-O-(B)_p-C_qH_{2q}- \qquad a)$$

où $R_1$ est un groupe hydrocarboné ayant de 9 à 23 atomes de carbone, q est un nombre de 2 à 4 et B et p ont les significations ci-dessus,

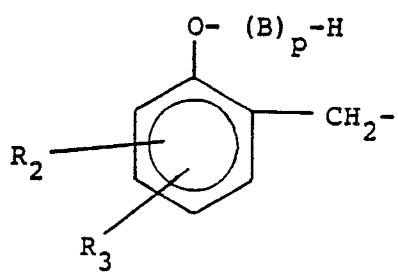

b)

où B et p ont les significations ci-dessus, $R_2$ et $R_3$ sont chacun un groupe alkyle ayant de 1 à 18 atomes de carbone, ou un hydrogène, ou un groupe de formule

$$-CH_2\overset{X}{\underset{|}{N^+}}(A)_{3-m_1}\quad Y^-$$

où A, X et Y ont les significations ci-dessus, et $m_1$ est un nombre de 0 à 2, ou encore

$$R_4O(B)_p(CH_2\underset{OH}{C}HCH_2)_r- \qquad c)$$

où $R_4$ est un groupe hydrocarboné ayant de 10 à 35 atomes de carbone, r est un nombre de 1 à 3, et B et p ont les significations ci-dessus; ou encore leur forme basique.

2. Procédé selon les revendications 1, caractérisé en ce que le composé de l'ammonium à ajouter à la formule générale

$$\left[R_1\overset{\overset{O}{\|}}{C}-O(B)_p\ C_qH_{2q}\right]_m - \overset{\overset{H}{|}}{N}{}^{+} - \left[(B)_p\ H\right]_{3-m} \qquad Y^-$$

dans laquelle $R_1$, B, Y, m, p et q ont les significations ci-dessus, ou sa forme basique.

3. Procédé selon la revendication 1, caractérisé en ce que le composé de l'ammonium à ajouter à la formule générale

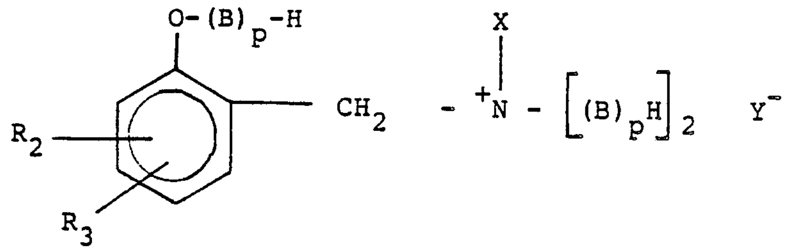

dans laquelle B, X, Y et p ont les significations ci-dessus, et $R_2$ et $R_3$ sont chacun un groupe alkyle ayant de 1 à 18 atomes de carbone ou un groupe de formule

$$CH_2 - \overset{\overset{X}{|}}{N}{}^{+} - (B_pH)_2 \quad Y^-,$$

dans laquelle B, X, Y et p ont les significations ci-dessus, ou leur forme base.

4. Procédé selon la revendication 1, caractérisé en ce que le composé de l'ammonium à ajouter à la formule générale

$$R_4O(B)_p\ CH_2\underset{\underset{OH}{|}}{C}HCH_2\ {}_m - \overset{\overset{X}{|}}{N}{}^{+} - (A)_{3-m}\ Y^-$$

dans laquelle $R_4$, B, A, X, Y, p et m ont les significations ci-dessus, ou sa forme base.

5. Procédé selon la revendication 4, caractérisé en ce que m vaut 2 et A est un groupe méthyle.

6. Procédé selon l'une quelconque des revendications 1—5, caractérisé en ce que le composé de l'ammonium est ajouté en une quantité de 0,05—2,0, de préférence de 0,1—1,0%, par rapport aux fibres cellulosiques sèches.

7. Procédé selon l'une quelconque des revendications 1—6, caractérisé en ce que le composé de l'ammonium est ajouté à la pâte après désencrage mais avant formation de la feuille.